## Europäisches Patentamt

(19) **European Patent Office**

**Office européen des brevets**

(11) Numéro de publication: **0 162 795**

**B1**

(12) **FASCICULE DE BREVET EUROPÉEN**

(45) Date de publication du fascicule du brevet:
12.07.89

(51) Int. Cl.⁴: **A 01 F 25/20**

(21) Numéro de dépôt: **85440023.1**

(22) Date de dépôt: **10.04.85**

(54) Moyens d'entraînement de machines pour le prélèvement de blocs de fourrage.

(30) Priorité: **17.04.84 FR 8406171**

(43) Date de publication de la demande:
**27.11.85 Bulletin 85/48**

(45) Mention de la délivrance du brevet:
**12.07.89 Bulletin 89/28**

(84) Etats contractants désignés:
**AT BE DE GB NL**

(56) Documents cité:
**FR-A-2 509 957**
**US-A-3 732 745**

(73) Titulaire: **KUHN S.A., 4, Impasse des Fabriques, F-67700 Saverne (FR)**

(72) Inventeur: **Wattron, Bernard, 159, rue Principale Schwenheim, F-67440 Marmoutier (FR)**
Inventeur: **Kobel, Richard, 46, route de Wintershouse, F-67590 Schweighouse- sur- Moder (FR)**

(74) Mandataire: **Andres, Jean- Claude, KUHN S.A. 4, Impasse des Fabriques, F-67700 Saverne (FR)**

LIBER, STOCKHOLM 1989

EP 0 162 795 B1

## Description

La présente invention concerne les machines pour le prélèvement de blocs de fourrage dans un silo horizontal, comportant notamment un châssis pourvu à sa partie inférieure de dents et, à une certaine distance au-dessus de ces dents, d'un bras portant à son extrémité extérieure un dispositif de coupe. Le bras portant le dispositif de coupe est articulé sur un support avec lequel il est déplaçable en rotation dans un plan sensiblement horizontal. Dans ce support est prévu un jeu de roues dentées comportant une roue dentée solidaire du châssis, une seconde roue dentée solidaire du bras portant le dispositif de coupe et une roue dentée intermédiaire libre en rotation qui est montée sur un axe logé dans les parois dudit support à des distances fixes par rapport aux deux autres roues dentées, laquelle roue dentée intermédiaire engrène avec ces deux autres roues dentées pour faire tourner ledit bras dans le sens opposé au sens de rotation dudit support.

Les machines de ce genre décrites dans la demande de brevet FR-A-2 509 957 réalisent un très bon travail. Toutefois, la puissance transmissible par les moyens d'entraînement du bras porteur du dispositif de coupe n'est pas suffisante par exemple pour le découpage de blocs de gros volume dans des silos bien tassés.

La présente invention a notamment pour but de remédier à cet inconvénient.

A cet effet, une importante caractéristique de l'invention consiste en ce qu'une seconde roue dentée intermédiaire libre en rotation est montée sur un second axe logé dans les parois du support à des distances fixes par rapport aux deux autres roues dentées et que les deux roues dentées intermédiaires se situent de part et d'autre d'une droite passant par les axes de rotation géométriques des deux roues dentées respectivement solidaires du châssis et du bras portant le dispositif de coupe et engrènent avec ces deux roues dentées de façon à se partager les forces à transmettre.

Grâce à cet agencement, la charge supportée par chacune d'entre elles est inférieure à la charge totale, ce qui permet d'augmenter la puissance transmissible en vue de pouvoir découper des blocs de volume plus important.

De plus, grâce à l'utilisation de deux roues dentées intermédiaires, les efforts s'exerçant sur les deux autres roues dentées se répartissent sur un nombre de dents plus important. Ces deux roues peuvent donc aussi supporter de plus grandes charges lors du découpage des blocs.

D'autres caractéristiques et avantages de l'invention ressortiront de la description ci-après, avec référence aux dessins annexés qui représentent, à titre d'exemple non limitatif, une forme de réalisation de l'invention.

Dans ces dessins:

- La figure 1 représente une vue de côté, avec une coupe partielle, d'une machine selon l'invention,
- La figure 2 représente une vue de dessus de la machine selon l'invention.
- La figure 3 représente, à plus grande échelle, une coupe suivant le plan brisé III - III de la figure 2.
- La figure 4 représente, à plus grande échelle, une coupe suivant le plan IV - IV de la figure 3.

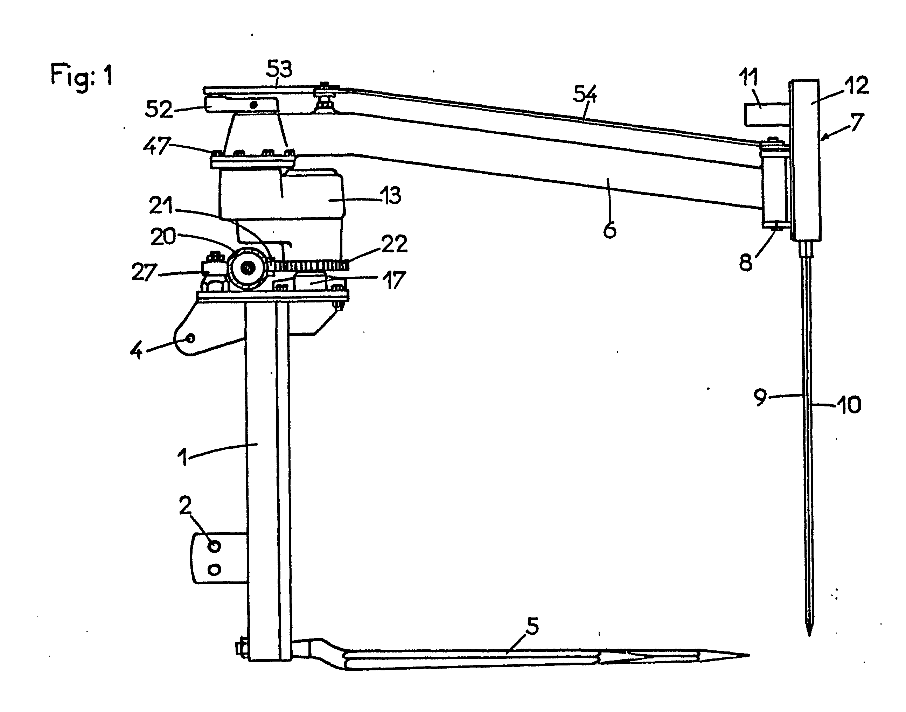

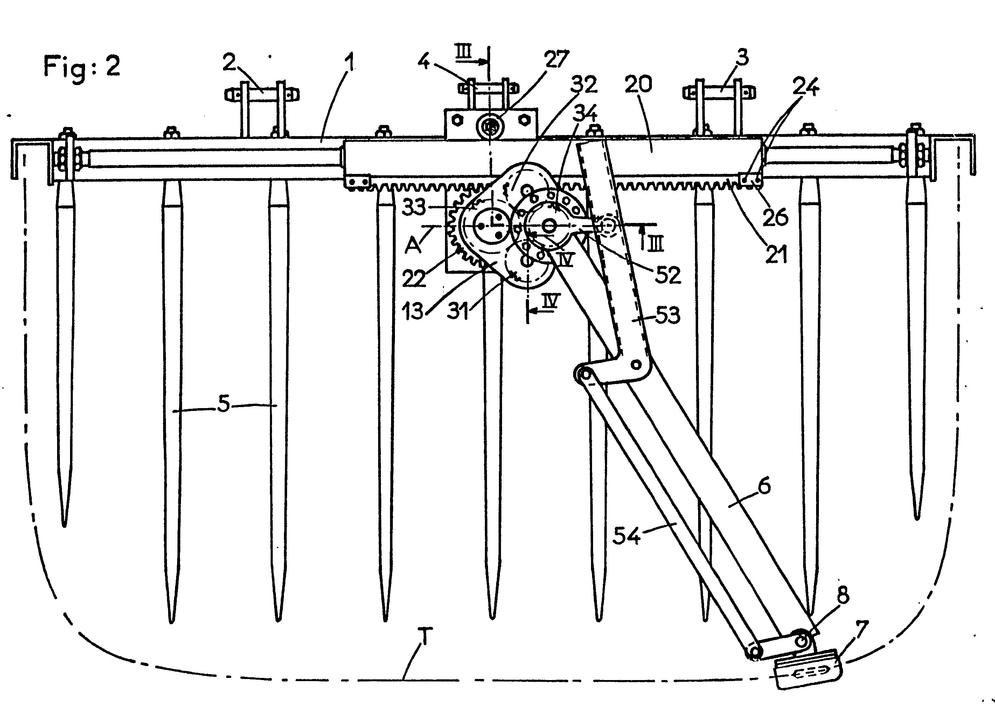

Telle qu'elle est représentée sur les figures 1 et 2, la machine selon l'invention comprend notamment un châssis (1) formant un cadre rigide. Ce châssis (1) comporte trois points d'accouplement pour l'attelage à un tracteur d'entraînement non représenté ces points d'accouplement sont constitués par deux chapes inférieures (2 et 3) et une chape supérieure (4). Ledit châssis est également pourvu à sa partie inférieure de dents (5) qui s'étendent dans un plan sensiblement horizontal. A sa partie supérieure est prévu un bras (6) qui porte à son extrémité extérieure un dispositif de coupe (7). Celui-ci est articulé sur ledit bras au moyen d'un axe sensiblement vertical (8). Il se compose essentiellement de deux couteaux parallèles (9 et 10) qui sont entraînés en un mouvement alternatif au moyen d'un moteur hydraulique (11) et d'excentriques logés dans un boîtier (12). Ces couteaux (9 et 10) s'étendent verticalement pratiquement jusqu'aux dents (5) prévues à la partie inférieure du châssis (1). Ces deux couteaux (9 et 10) pourraient être remplacés par un seul couteau.

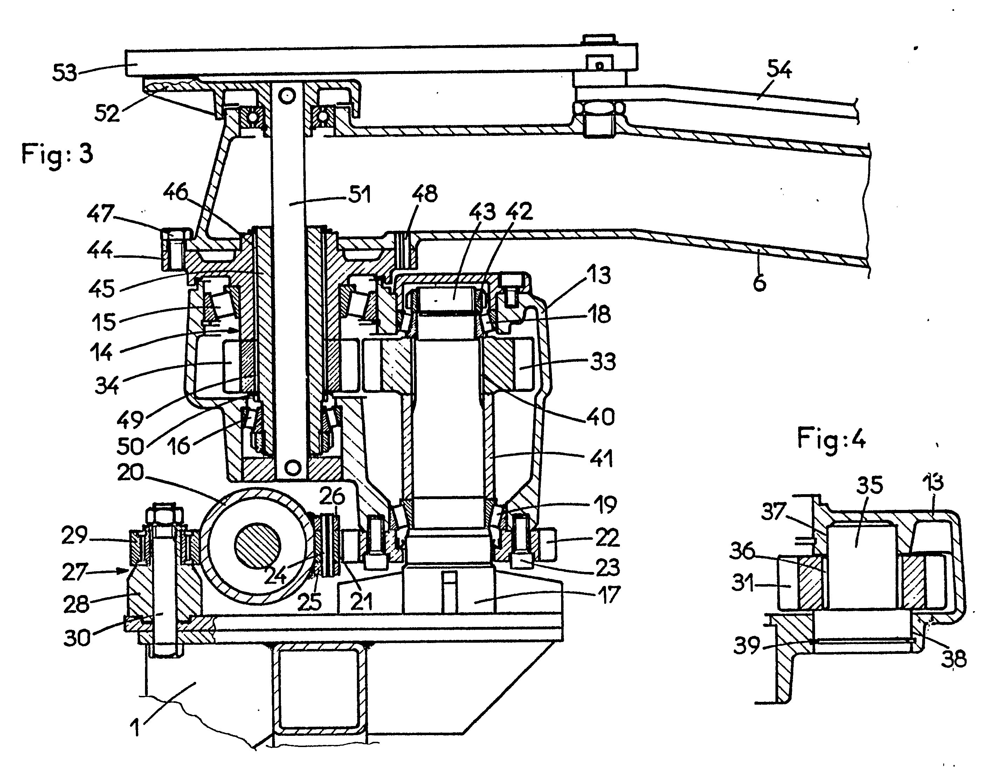

Le bras (6) portant le dispositif de coupe (7) est articulé sur un support (13) au moyen d'un axe sensiblement vertical (14). La longueur du bras (6) est supérieure à celle de ce support (13). Cet axe (14) est guidé dans ledit support au moyen de deux roulements à rouleaux (15 et 16). Ce support (13) est lui-même articulé sur un axe sensiblement vertical (17) qui est solidaire du châssis (1) de la machine. Il est aussi guidé sur cet axe au moyen de deux roulements à rouleaux (18 et 19). Ledit support et le bras (6) peuvent être déplacés autour de l'axe d'articulation (17) dans un plan sensiblement horizontal, au moyen d'un vérin hydraulique à double tige (20) qui est fixé sur le châssis (1). En vue de ce déplacement, le corps du vérin (20) est muni d'une crémaillère (21) qui engrène avec une roue ou couronne dentée (22) fixée à la partie inférieure du support (13) au moyen de vis (23) (Figure 3). Cette crémaillère (21) peut ainsi être déplacée au moyen du vérin hydraulique (20) dont la commande s'effectue à partir du siège du tracteur. Elle entraîne alors la couronne dentée (22), le support (13) et, par l'intermédiaire de ce dernier, le bras porteur (6) du dispositif de coupe (7) autour de l'axe d'articulation (17) solidaire du châssis (1). La fixation de la crémaillère (21) sur le corps du vérin (20) est réalisée au moyen de goupilles (24) et de pattes (25 et 26) qui sont soudées sur ledit corps du vérin (20). Ce vérin (20) est guidé en translation au moyen d'une butée (27). Cette butée est constituée par un axe (28) portant un galet (29), ledit axe étant fixé sur le châssis (1) au moyen d'un boulon (30).

Dans le support (13) est par ailleurs prévu un jeu de roues dentées pour faire tourner le bras porteur (6) du dispositif de coupe (7) dans le sens opposé au sens de rotation dudit support (13). Cette rotation du bras porteur (6) s'effectue autour de son axe d'articulation (14) avec le support (13), en même temps qu'il tourne avec ce dernier.

Conformément à l'invention, ledit jeu de roues dentées se compose de deux roues dentées intermédiaires (31 et 32) engrènant, de façon à se partager les forces à transmettre, avec les deux mêmes roues dentées (33 et 34) qui sont solidaires l'une du châssis (1) et l'autre du bras (6) portant le dispositif de coupe (7) (voir figures 2 et 3). Les deux roues intermédiaires (31 et 32) assurent la liaison entre les deux autres roues (33 et 34). Elles se situent de part et d'autre et à égale distance d'une droite (A) passant par les axes de rotation géométriques des deux roues dentées (33 et 34). De plus, ces deux roues intermédiaires (31 et 32) sont sensiblement identiques. Le montage de chacune de ces roues intermédiaires (31 et 32) est effectué conformément à l'exemple représenté sur la figure 4. Dans cet exemple, la roue dentée (31) est montée libre en rotation sur un axe (35) au moyen d'aiguilles jointives (36). Ledit axe est logé de manière à être immobile dans deux alésages (37 et 38) prévus dans les parois du support (13). Son blocage axial est assuré au moyen d'un circlips (39).

Comme cela ressort de la figure 3, la roue dentée (33) qui est solidaire du châssis (1) est montée sur l'axe de pivotement (17) du support (13), cet axe étant lui-même, comme décrit précédemment, solidaire du châssis (1). La liaison entre la roue dentée (33) et l'axe (17) est réalisée au moyen de cannelures (40). Le positionnement de la roue dentée est assuré par les roulements à rouleaux (18 et 19), une entretoise (41) et un écrou (42) se vissant sur l'extrémité filetée (43) de l'axe d'articulation (17).

L'autre roue dentée (34) est rendue solidaire du bras porteur (6) du dispositif de coupe (7) par l'intermédiaire de son axe de pivotement (14). Cet axe est réalisé en deux parties (44 et 45) liées entre elles au moyen de cannelures (46). La partie extérieure (44) est fixée au bras (6) au moyen de vis (47) et de goupilles (48). Ladite roue dentée (34) est solidarisée de la partie intérieure (45) de l'axe (14) par des cannelures (49). Son positionnement est assuré au moyen d'un circlips (50).

Ledit axe de pivotement (14) qui est guidé dans le support (13) au moyen des roulements à rouleaux (15 et 16) permet au bras porteur (6) de tourner par rapport audit support. Ainsi, lorsque le support (13) est déplacé autour de son axe d'articulation (17), comme décrit précédemment, les roues dentées intermédiaires (31 et 32) et la roue dentée (34) se déplacent également autour dudit axe (17) et sont mises en rotation par la roue dentée (33), par suite de leur engrènement. En raison de la disposition de roues intermédiaires (31 et 32) entre les deux roues dentées (33 et 34), la rotation de la roue (34) et du bras (6) auquel elle est reliée, s'effectue dans le sens opposé au sens de rotation du support (13) autour de son axe d'articulation (17) avec le châssis (1). En sus, ces deux mouvements de rotation sont synchronisés de telle sorte que la vitesse de rotation du bras porteur (6) au moyen de son axe d'articulation (14) est égale à quatre tiers de la vitesse de rotation du support (13) autour de son axe d'articulation (17) avec le châssis (1). Grâce à ces mouvements synchronisés le support (13) et le bras porteur (6) déplacent le dispositif de coupe (7) suivant une trajectoire (T) en forme de U, en vue du découpage de blocs de forme parallélépipédique.

Le support (13) comporte par ailleurs une tige (51) pour orienter le dispositif de coupe (7) durant le découpage. Cette tige (51) traverse l'axe de pivotement (14) et le bras porteur (6). Son extrémité supérieure est reliée à des tringles (52, 53 et 54) qui orientent le dispositif de coupe (7) autour de son axe d'articulation (8), de sorte que les couteaux (9 et 10) soient toujours dirigés dans la direction de déplacement.

Pour l'extraction d'un bloc de fourrage, le dispositif conforme à l'invention est accouplé à un tracteur. A l'aide de ce dernier, les dents (5) de la partie inférieure du châssis (1) sont enfoncées dans le fourrage. Les deux couteaux (9 et 10) sont alors entraînés au moyen du moteur hydraulique (11) et déplacés à l'aide du bras porteur (6) suivant la trajectoire (T), en vue du découpage d'un bloc ayant une forme sensiblement parallélépipédique. Grâce à la grande puissance transmissible par les roues dentées (31 à 34), on peut découper des blocs de gros volume. Cette grande puissance permet aussi de découper des blocs dans des silos bien tassés donc relativement durs et résistants.

Le bloc découpé peut alors être retiré du silo et transporté jusqu'au lieu d'affouragement où il peut être distribué immédiatement ou être entreposé tel quel pendant plusieurs jours. La machine selon l'invention peut également être équipée d'un dispositif de déchiquetage et de distribution.

Il est bien évident qu'on pourra apporter à l'exemple de réalisation décrit ci-dessus divers perfectionnements, modifications ou additions ou remplacer certains éléments par des éléments équivalents sans pour autant sortir du cadre de la présente invention.

## Revendications

1. Machine pour le prélèvement de blocs de fourrage dans un silo horizontal, comportant notamment un châssis (1) pourvu à sa partie inférieure de dents (5) et, à une certaine distance au-dessus de ces dents, d'un bras (6) portant à son extrémité extérieure un dispositif de coupe (7), ledit bras étant articulé sur un support (13) avec lequel il est déplaçable en rotation dans un plan sensiblement horizontal, un jeu de roues dentées comportant une roue dentée (33) solidaire du châssis (1), une seconde roue dentée (34) solidaire du bras (6) et une roue dentée intermédiaire (31) libre en rotation qui est montée sur un axe logé dans les parois dudit support (13) à des distances fixes par rapport aux deux autres roues dentées (33 et 34), laquelle roue dentée intermédiaire (31) engrène avec ces deux autres roues dentées (33 et 34) pour faire tourner le bras (6) dans le sens opposé au sens de rotation de ce support (13), caractérisée par le fait qu'une seconde roue dentée intermédiaire (32) libre en rotation est montée sur un second axe (35) logé dans les parois du support (13) à des distances fixes par rapport aux deux autres roues dentées (33 et 34) et que les deux roues dentées intermédiaires se situent de part et d'autre d'une droite (A) passant par les axes de rotation géométriques des deux roues dentées (33 et 34) et engrènent avec les deux roues dentées (33 et 34) de façon à se partager les forces à transmettre.

2. Machine selon la revendication 1, caractérisée par le fait que les deux roues dentées intermédiaires (31 et 32) sont sensiblement identiques et se situent à égale distance de la droite (A).

**Patentansprüche**

1. Maschine zur Silageblockentnahme aus einem horizontalen Silo, mit insbesondere einem Rahmen (1), welcher an seinem unteren Ende mit Zähnen (5) und in einer gewissen Entfernung oberhalb dieser Zähne mit einem Arm (6) versehen ist, der an seinem ausseren Ende eine Schneidvorrichtung (7) trägt, welcher Arm beweglich auf einem Halter (13) angebracht ist, mit welchem er in einer nahezu horizontalen Ebene drehbar ist, ein Satz Zahnräder bestehend aus einem mit dem Rahmen verbundenen Zahnrad (33), einem zweiten mit dem Arm (6) verbundenen Zahnrad (34) und einem freirotierenden Zwischenzahnrad (31) welches auf einer Achse angebracht ist, die in den Wänden des Halters (13) in festen Abständen zu den zwei anderen Zahnrädern (33 und 34) gelagert ist, welches Zwischenzahnrad (31) mit den zwei anderen Zahnrädern (33 und 34) eingreift, um den Arm (6) in die zur Drehrichtung des Halters (13) entgegengesetzte Richtung zu drehen, dadurch gekennzeichnet, dass ein zweites freirotierendes Zahnrad (32) auf einer zweiten Achse (35) angebracht ist, die in den Wänden des Halters (13) in festen Abständen zu den zwei anderen Zahnrädern (33 und 34) gelagert ist und, dass die zwei Zwischenzahnräder sich beiderseits einer Geraden (A) befinden, welche durch die geometrischen Drehachsen der zwei anderen Zahnräder (33 und 34) läuft, und mit den zwei anderen Zahnrädern (33 und 34) eingreifen, um sich die Kräften, die zu übertragen sind, zu teilen.

2. Maschine nach Anspruch 1, dadurch gekennzeichnet, dass die zwei Zwischenzahnräder (31 und 32) nahezu identisch sind und sich in dem gleichen Abstand zu der Geraden (A) befinden.

**Claims**

1. Implement for cutting of silage blocks from a horizontal silo with especially one frame (1) equipped on its lower part with teeth (5) and at a certain distance above these teeth, with an arm (6) its outer end having a cutting device (7), said arm being articulated on a support (13) with which it can be moved in rotation in a nearly horizontal plane, a set of gearwheels comprising one gearwheel (33) integral with the frame (1), a second gearwheel (34) integral with the arm (6) and an intermediate gearwheel (31) free in rotation which is mounted on an axis housed in the walls of said support (13) at fixed distances in respect to the two other gearwheels (33 and 34), said intermediate gearwheel (31) intermeshing with these two other gearwheels (33 and 34) in order to make the arm (6) turn in the opposite direction to the direction of rotation of this support (13), characterized by the fact that a second intermediate gearwheel (32) free in rotation is mounted on a second axis (35) housed in the walls of the support (13) at fixed distances in respect to the two other gearwheels (33 and 34) and that the two intermediate gearwheels are situated on both sides of a line (A) passing through the geometric axes of rotation of the two gearwheels (33 and 34) and intermesh with the two gearwheels (33 and 34) in such a way that they share power to be transmitted.

2. Implement according to Claim 1, characterized by the fact that the two intermediate gearwheels (31 and 32) are nearly identical and situated at the same distance in respect of the line (A).

Fig. 1

Fig: 2

Fig: 3

Fig: 4

EP 0 162 795 B1